# DEMANDE DE BREVET EUROPEEN

(11) **EP 2 192 505 A1**
(43) Date de publication de la demande: **02.06.2010**
(21) Numéro de dépôt: 09177366.3
(22) Date de dépôt: 27.11.2009
(51) Int. Cl.: G06F 17/30

(54) **Dispositif et procédé de gestion de signets électroniques, produit programme d'ordinateur et moyen de stockage correspondants**

(30) Priorité: 28.11.2008 FR 0858119
(71) Demandeur: Anyware Technologies, 31670 Laberge (FR)
(72) Inventeur: Cantegrel, Thibault, 31450, CORRONSAC (FR)
(74) Mandataire: Guéné, Patrick

(57) **Abrégé**

Il est proposé un dispositif (1) de gestion de signets électroniques, comprenant des moyens de réalisation d'une fonction principale de gestion de signets électroniques, activés au démarrage et à des instants déterminés, sauf en cas de passage dudit dispositif de gestion de signets dans un mode de veille, lesdits moyens de réalisation de la fonction principale comprenant : des moyens de transmission, permettant de transmettre à un serveur une requête d'obtention d'une liste préconfigurée de signets, ladite requête comprenant un identifiant dudit dispositif de gestion de signets ; des moyens de réception, permettant de recevoir ladite liste préconfigurée transmise par ledit serveur en réponse à ladite requête ; des moyens d'affichage, permettant d'afficher la liste préconfigurée reçue ; et des moyens, d'utilisation, permettant à un utilisateur d'utiliser les signets de la liste préconfigurée affichée. Ledit dispositif de gestion de signets ne comprend pas de moyens participant à une construction initiale de ladite liste préconfigurée sur ledit serveur, ni de moyens participant à un ajout à ladite liste préconfigurée d'au moins un signet supplémentaire non proposé préalablement par ledit serveur.

## Description

### 1. DOMAINE DE L'INVENTION

Le domaine de l'invention est celui des techniques de gestion de signets électroniques, aussi appelés « marques-pages » (« bookmark » en anglais), « favoris » ou encore « raccourcis ».

Plus précisément, l'invention concerne un dispositif électronique (et un procédé mis en oeuvre par ce dernier) dont la fonction principale est la gestion de signets électroniques.

Classiquement, un signet électronique comprend un titre, qui identifie une page web dont on souhaite conserver la trace, et une adresse URL (pour « Uniform Ressource Locator » en anglais) de cette page web. Optionnellement, si l'utilisateur fournit ces informations, le signet peut également comprendre un ou plusieurs mots-clefs et une description détaillant cette page web.

A l'origine, il a été proposé d'intégrer un outil de mémorisation des signets au navigateur web d'un terminal communiquant classique de l'utilisateur, pour permettre à l'utilisateur de conserver, dans le navigateur, la trace des pages web auxquelles il souhaitait revenir aisément. Avec ce premier type d'outil, appelé ci-après outil local, la gestion et la mémorisation des signets sont donc effectuées dans le navigateur.

Par terminal communiquant classique, on entend une machine (ordinateur fixe ou portable, PDA (pour « Personal Digital Asssitant » en anglais, ou « assistant numérique personnel » en français), téléphone cellulaire, etc comprenant un système d'exploitation sur lequel est exécuté un navigateur web.

Par la suite, afin de faciliter la gestion des signets, il a été proposé un second type d'outils de gestion de signets en ligne, permettant aux utilisateurs, grâce au navigateur de leur terminal communiquant classique, d'utiliser un site web spécial offrant un service en ligne permettant de sauvegarder, et même partager, des signets dans ce site web spécial.

A titre d'exemple de ce second type d'outils, le site web « del.icio.us » a été développé dans une optique communautaire pour pallier aux faiblesses des outils traditionnels de gestion de signets (intégrés aux navigateurs). Ce site offre un outil de gestion de signets en ligne permettant à chaque utilisateur, qui y accède grâce au navigateur de son terminal communiquant classique, d'organiser et mémoriser ses signets sur le site web « del.icio.us » (et non pas dans son navigateur). Ceci permet à l'utilisateur d'avoir accès à sa propre liste de signets à partir de n'importe quel terminal communiquant classique branché à Internet, et aussi aux listes de signets construites par d'autres internautes (et ainsi bénéficier du travail de mémorisation de signets effectué par ces autres internautes).

### 2. ARRIÈRE-PLAN TECHNOLOGIQUE

Un inconvénient des techniques actuelles, aussi bien quand l'outil de gestion des signets est local (c'est-à-dire intégré au navigateur) que quand il est en ligne (c'est-à-dire déporté dans un site web spécial), est qu'elles ne sont pas aisées à utiliser pour des utilisateurs novices.

En effet, dans le cas d'un outil de gestion des signets local, l'utilisateur doit savoir se servir d'un terminal communiquant classique (ordinateur, PDA, téléphone cellulaire,...), et plus précisément doit savoir :
- interagir avec le système d'exploitation du terminal communiquant classique pour lancer l'exécution du navigateur (parmi plusieurs applications supportées par le système d'exploitation) ; puis
- utiliser, parmi les fonctionnalités du navigateur web, l'outil de gestion des signets pour construire et visualiser sa liste de signets.

Dans le cas d'un outil de gestion des signets en ligne, c'est encore plus complexe puisque l'utilisateur doit savoir :
- interagir avec le système d'exploitation du terminal communiquant classique pour lancer l'exécution du navigateur (parmi plusieurs applications supportées par le système d'exploitation) ; puis
- utiliser le navigateur web pour :
   * accéder à un site web spécial offrant un outil de gestion des signets en ligne (par exemple « del.icio.us »), ce qui implique de la part de l'utilisateur la connaissance de l'adresse URL de ce site web, et la saisie d'un identifiant (login) et un mot de passe (password) ;
   * utiliser les fonctionnalités de l'outil de gestion des signets pour construire et visualiser sa liste de signets.

Or, il existe aujourd'hui de nombreuses personnes novices ne sachant pas, ou ne voulant pas, effectuer toutes les manipulations précitées sur un terminal communiquant classique. En pratique, ces personnes novices n'utilisent pas tous les avantages associés aux signets électroniques et n'accèdent donc pas facilement à des pages web qui pourtant présentent un réel intérêt pour elles. Il existe pourtant un besoin pour ces personnes novices de pouvoir de manière aisée visualiser une liste de signets, et utiliser les signets de cette liste (c'est-à-dire accéder aux pages web dont les signets conservent la trace).

En outre, pour ces personnes novices comme pour des personnes expérimentées, il est difficilement imaginable d'utiliser un terminal communiquant classique, dédié uniquement pour réaliser cette fonction de visualisation et utilisation d'une liste de signets. En effet, un terminal communiquant classique (ordinateur, PDA, téléphone cellulaire,...) n'est pas adapté car il est généralement coûteux, encombrant et consommateur d'énergie, du fait qu'il est conçu pour exécuter de nombreuses applications offrant de nombreuses fonctionnalités.

Un autre inconvénient des techniques actuelles de gestion des signets est qu'elles ne permettent pas de visualiser, en même temps qu'une liste de signets:
- des informations sur l'état des éléments mémorisés par les signets ;
- des commandes pouvant être exécutées par les éléments mémorisés par les signets ; ou
- des évènements relatifs aux éléments mémorisés par les signets.

Encore un autre inconvénient des techniques actuelles de gestion des signets est qu'elles ne proposent de gérer que deux types de signets : ceux mémorisant des contenus (par exemple, contenus audio, vidéo ou texte) ou des services (par exemple, service de prévision météo). Il existe un besoin de pouvoir gérer d'autres types de signets, mémorisant des personnes (par exemple, cercle d'amis) ou des objets connectés (par exemple, ces capteurs ou actuateurs).

Encore un autre inconvénient des techniques actuelles de gestion des signets est qu'elles ne proposent pas de solution simple pour que la liste de signets affichée sur un écran soit adaptée à l'utilisateur situé à proximité de cet écran.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique de gestion des signets permettant à des utilisateurs novices ou expérimentés de visualiser et utiliser de manière aisée une liste de signets.

Au moins un mode de réalisation de l'invention a également pour objectif de fournir une telle technique qui pour l'utilisateur soit peu coûteuse, peu encombrante et peu consommatrice en énergie.

Un autre objectif d'au moins un mode de réalisation de l'invention est de fournir une telle technique permettant de visualiser une liste de signets enrichie.

Un objectif complémentaire d'au moins un mode de réalisation de l'invention est de fournir une telle technique permettant de gérer un nombre plus élevé de types de signets.

Encore un autre objectif d'au moins un mode de réalisation de l'invention est de fournir une telle technique permettant d'adapter la liste de signets affichée sur un écran à l'utilisateur situé à proximité de cet écran.

### 4. EXPOSÉ DE L'INVENTION

Dans un mode de réalisation particulier de l'invention, il est proposé un dispositif de gestion de signets électroniques, comprenant des moyens de réalisation d'une fonction principale de gestion de signets électroniques, activés au démarrage et à des instants déterminés, sauf en cas de passage dudit dispositif de gestion de signets dans un mode de veille, lesdits moyens de réalisation de la fonction principale comprenant :
- des premiers moyens de transmission, permettant de transmettre à un serveur une requête d'obtention d'une liste préconfigurée de signets, ladite requête comprenant un identifiant dudit dispositif de gestion de signets;
- des premiers moyens de réception, permettant de recevoir ladite liste préconfigurée transmise par ledit serveur en réponse à ladite requête;
- des moyens d'affichage, permettant d'afficher la liste préconfigurée reçue;
- des moyens d'utilisation, permettant à un utilisateur d'utiliser les signets de la liste préconfigurée affichée;
- des deuxièmes moyens de réception, permettant de recevoir une proposition, envoyée par le serveur, d'ajout d'au moins un signet supplémentaire à ladite liste préconfigurée ;
- des moyens d'acceptation ou refus, permettant audit utilisateur de formuler une acceptation ou un refus de la proposition reçue;
- des deuxièmes moyens de transmission, permettant de transmettre au serveur l'acceptation ou le refus formulé par l'utilisateur, afin que le serveur ajoute ledit au moins un signet supplémentaire à ladite liste préconfigurée en cas d'acceptation.

Ledit dispositif de gestion de signets ne comprend pas de moyens participant à une construction initiale de ladite liste préconfigurée sur ledit serveur, ni de moyens participant à un ajout à ladite liste préconfigurée d'au moins un signet supplémentaire non proposé préalablement par ledit serveur.

Le principe général de l'invention consiste donc à matérialiser une liste de signets par l'intermédiaire d'un dispositif électronique spécifique, dont c'est la fonction principale. L'invention repose donc sur une approche tout à fait nouvelle et inventive consistant à fournir un dispositif dédié à la visualisation et l'utilisation d'une liste préconfigurée de signets, mais ne permettant pas la construction initiale de cette liste préconfigurée. Cette construction initiale peut être effectuée soit par défaut (par exemple par le gestionnaire du serveur) soit par un utilisateur expérimenté (qui utilise pour cela un terminal communiquant classique).

Ainsi, le dispositif spécifique de l'invention est peu coûteux, peu encombrant et peu consommateur en énergie. En effet, contrairement à un terminal communiquant classique tel que discuté ci-dessus (ordinateur, PDA, téléphone cellulaire,...), il ne nécessite pas de système d'exploitation du terminal exécutant un navigateur web classique.

En outre, il peut être utilisé par un utilisateur novice puisque l'interface du dispositif n'est pas celle d'un navigateur web classique dans le sens où il est impossible d'accéder à autre chose que ce qui a été préconfiguré. Ainsi, son utilisation en est extrêmement simplifiée.

Bien sûr, le dispositif spécifique de l'invention présente également un intérêt pour un utilisateur expérimenté, ce dernier pouvant utiliser :
- un terminal communiquant classique (par exemple un ordinateur fixe dans son salon) pour effectuer la construction initiale de la liste préconfigurée de signets (ou pour ultérieurement y ajouter des signets non proposé préalablement par le serveur), et
- le dispositif spécifique de l'invention (se présentant par exemple comme un cadre posé sur un meuble ou fixé sur la porte du réfrigérateur) pour visualiser et utiliser la liste préconfigurée de signets.

Ainsi, l'utilisateur peut aisément compléter la liste préconfigurée de signets, mais seulement dans la limite de ce que le serveur lui propose. Ceci est donc clairement différent des techniques connues précitées qui offrent toute liberté à l'utilisateur pour construire sa liste, mais comme expliqué ci-dessus ceci implique que l'utilisateur soit expérimenté et dispose d'un terminal communiquant classique.

Avantageusement, lesdits moyens de réalisation de la fonction principale comprennent :
- des premiers moyens de sélection, permettant audit utilisateur de sélectionner au moins un signet à supprimer de ladite liste préconfigurée ;
- des troisièmes moyens de transmission, permettant de transmettre au serveur une requête de suppression dudit au moins un signet à supprimer, afin que le serveur supprime ledit au moins un signet à supprimer de ladite liste préconfigurée.

Ainsi, l'utilisateur peut aisément supprimer un signet de la liste préconfigurée de signets.

Selon une caractéristique avantageuse, chaque signet de ladite liste préconfigurée comprend un identifiant d'un élément mémorisé par ledit signet, et un lien vers ledit élément mémorisé par ledit signet. Les éléments mémorisés par les signets de ladite liste préconfigurée appartiennent au groupe comprenant des objets connectés, des services, des personnes et des contenus.

Ainsi, le dispositif spécifique de l'invention permet de gérer un nombre plus élevé de types de signets.

Par lien, on entend notamment, mais non exclusivement, une adresse URL. Par exemple :
- pour un signet dont l'élément mémorisé est un contenu ou un service, le lien vers cet élément est son adresse URL dans le réseau internet;
- pour un signet dont l'élément mémorisé est un objet connecté, le lien vers cet élément est son adresse URN (pour « Uniform Ressource Name » en anglais), qui l'identifie de manière unique notamment dans le serveur ; et
- pour un signet dont l'élément mémorisé est une personne, le lien vers cette personne est un identifiant, qui l'identifie de manière unique notamment dans le serveur.

De façon avantageuse, chaque signet de ladite liste préconfigurée comprend un identifiant d'un élément mémorisé par ledit signet, et un lien vers ledit élément mémorisé par ledit signet. Lesdits moyens d'utilisation comprennent des troisièmes moyens de réception, permettant de recevoir au moins un événement, envoyé par le serveur, relatif à un élément mémorisé par un des signets de ladite liste préconfigurée. Lesdits moyens d'affichage permettent d'afficher ledit au moins un événement reçu.

Ainsi, le dispositif spécifique de l'invention permet de visualiser une liste de signets enrichie avec des évènements relatifs aux éléments mémorisés par les signets.

Avantageusement, chaque signet de ladite liste préconfigurée comprend un identifiant d'un élément mémorisé par ledit signet, et un lien vers ledit élément mémorisé par ledit signet. Au moins un signet de ladite liste préconfigurée est associé à au moins une information, dynamique ou non, sur l'état de l'élément mémorisé par ledit signet. Lesdits moyens d'affichage permettent d'afficher ladite au moins une information.

Ainsi, le dispositif spécifique de l'invention permet de visualiser une liste de signets enrichie avec des informations sur l'état des éléments mémorisés par les signets.

De façon avantageuse, chaque signet de ladite liste préconfigurée comprend un identifiant d'un élément mémorisé par ledit signet, et un lien vers ledit élément mémorisé par ledit signet. Au moins un signet de ladite liste préconfigurée est associé à au moins une commande pouvant être exécutée par l'élément mémorisé par ledit signet. Lesdits moyens d'affichage permettent d'afficher ladite au moins une commande.

Ainsi, le dispositif spécifique de l'invention permet de visualiser une liste de signets enrichie avec des commandes, que l'utilisateur peut activer.

Avantageusement, ledit dispositif comprend des moyens de communication sans fil avec ledit serveur.

Ainsi, le dispositif spécifique de l'invention peut être utilisé n'importe où.

Selon une caractéristique avantageuse, ledit dispositif comprend :
- des moyens de détection, permettant de détecter un utilisateur et obtenir un identifiant un identifiant de l'utilisateur détecté;
- des moyens d'insertion, activés en cas de détection d'un utilisateur et permettant d'insérer l'identifiant de l'utilisateur détecté dans ladite requête d'obtention de la liste préconfigurée de signets;
de sorte que ladite liste préconfigurée, transmise par ledit serveur en réponse à ladite requête, soit fonction de l'identifiant de l'utilisateur détecté.

Ainsi, le dispositif spécifique de l'invention affiche une liste de signets qui est fonction de l'utilisateur détecté. Dans le cas où aucun utilisateur n'est détecté, la liste affichée est fonction du dispositif lui-même, dont l'identifiant est fourni dans la requête envoyée au serveur pour l'obtention de la liste.

Dans un autre mode de réalisation, l'invention concerne un procédé de gestion de signets électroniques, exécuté par un dispositif de gestion de signets électroniques. Ce procédé comprend des étapes de réalisation d'une fonction principale de gestion de signets électroniques, effectuées au démarrage dudit dispositif et à des instants déterminés, sauf en cas de passage dudit dispositif dans un mode de veille, lesdites étapes de réalisation de la fonction principale comprenant des étapes consistant à :
- transmettre à un serveur une requête d'obtention d'une liste préconfigurée de signets, ladite requête comprenant un identifiant dudit dispositif de gestion de signets;
- recevoir ladite liste préconfigurée transmise par ledit serveur en réponse à ladite requête;
- afficher la liste préconfigurée reçue;
- permettre à un utilisateur d'utiliser les signets de la liste préconfigurée affichée.
- recevoir une proposition, envoyée par le serveur, d'ajout d'au moins un signet supplémentaire à ladite liste préconfigurée ;
- permettre à un utilisateur d'accepter ou de refuser la proposition reçue;
- transmettre au serveur l'acceptation ou le refus formulé par l'utilisateur, afin que le serveur ajoute ledit au moins un signet supplémentaire à ladite liste préconfigurée en cas d'acceptation.

Ce procédé ne comprend pas d'étape participant à une construction initiale de ladite liste préconfigurée sur ledit serveur, ni d'étape participant à un ajout à ladite liste préconfigurée d'au moins un signet supplémentaire non proposé préalablement par ledit serveur.

Plus généralement, dans des variantes de réalisation, le procédé selon l'invention comprend des étapes pour la mise en oeuvre des divers moyens du dispositif de gestion de signets selon l'invention tel que décrit précédemment (dans l'un quelconque de ses différents modes de réalisation).

Dans un autre mode de réalisation, l'invention concerne un produit programme d'ordinateur téléchargeable depuis un réseau de communication et/ou enregistré sur un support lisible par ordinateur et/ou exécutable par un processeur. Ce produit programme d'ordinateur comprend des instructions de code de programme pour la mise en oeuvre du procédé précité (dans l'un quelconque de ses différents modes de réalisation), lorsque ledit programme est exécuté sur un ordinateur.

Dans un autre mode de réalisation, l'invention concerne un moyen de stockage lisible par ordinateur, éventuellement totalement ou partiellement amovible, stockant un programme d'ordinateur comprenant un jeu d'instructions exécutables par un ordinateur pour mettre en oeuvre le procédé précité (dans l'un quelconque de ses différents modes de réalisation).

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 illustre le principe général de fonctionnement d'un dispositif selon un mode de réalisation particulier de l'invention ;
- la figure 2 présente un exemple de liste de signets enrichie affichée par le dispositif de gestion de signets de la figure 1 ;
- la figure 3 présente un diagramme de séquence détaillant le fonctionnement du dispositif de gestion de signets de la figure 1, dans des phases de démarrage, vérification périodique et modification ;
- la figure 4 présente un diagramme de séquence détaillant le fonctionnement du dispositif de gestion de signets de la figure 1, dans des phases d'ajout et de suppression de signet ;
- la figure 5 présente un diagramme de séquence détaillant le fonctionnement du dispositif de gestion de signets de la figure 1, dans une phase de détection d'un utilisateur ;
- la figure 6 présente la structure d'un dispositif selon un mode de réalisation particulier de l'invention.

### 6. DESCRIPTION DÉTAILLÉE

Sur toutes les figures du présent document, les éléments et étapes identiques sont désignés par une même référence numérique.

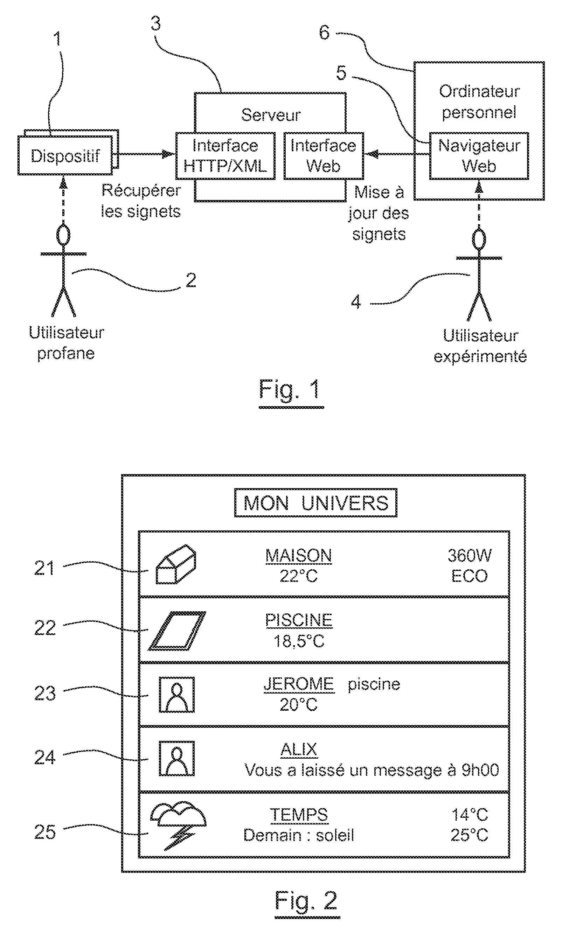

On présente maintenant, en relation avec la **figure 1****,** le principe général de fonctionnement d'un dispositif selon un mode de réalisation particulier de l'invention.

Un utilisateur expérimenté 4 utilise un navigateur 5 d'un ordinateur personnel 6 (ou d'un téléphone portable) pour accéder à un serveur 3, via une interface web. De cette manière, l'utilisateur expérimenté 4 peut construit puis mettre à jour (ajout, suppression ou modification) une liste de signets qui est mémorisée par le serveur 3 (et appelée par la suite liste préconfigurée).

Par ailleurs, un utilisateur profane 2 utilise un dispositif de gestion de signets 1, qui est connecté au serveur 3, via une interface http/XML. Pour cela, il utilise éventuellement une connexion sans fil (par exemple de type GSM/GPRS). Il est éventuellement multi-protocoles (exemple : Wifi/ADSL et GSM/GPRS).

La fonction principale du dispositif 1 est la gestion de signets. Il permet à l'utilisateur profane 2 de visualiser la liste préconfigurée de signets, sans aucune action particulière de sa part. Il permet également à l'utilisateur profane 2 d'utiliser de manière aisée les signets de la liste préconfigurée. Pour cela, le dispositif 1 comprend des moyens d'affichage et d'utilisation qui sont présentés en détail par la suite. Ces moyens comprennent par exemple un écran tactile, mais d'autres moyens sont bien sûr envisageables (commande par la voix, détection de la gestuelle des doigts par une caméra, etc.).

Les échanges entre le serveur et le dispositif s'effectuent par exemple comme suit : le serveur (serveur d'application web) génère et transmet (selon le protocole HTTP) au dispositif une page web contenant un client logiciel en Javascript. Ce logiciel client permet par la suite au dispositif de communiquer (selon le protocole TCP/XML (AJAX)) avec le serveur, pour la mise à jour de la liste de signets.

Contrairement au navigateur 5 de l'ordinateur personnel 6, le dispositif 1 ne comprend pas de moyens participant à la construction initiale de la liste préconfigurée mémorisée sur le serveur 3, ni de moyens participant à un ajout à cette liste préconfigurée d'un signet supplémentaire non proposé préalablement par le serveur.

On présente maintenant un exemple de fonctionnalités d'un mode de réalisation particulier du dispositif 1, permettant à l'utilisateur profane 2 d'utiliser la liste de signets, ainsi que divers enrichissements de celle-ci (informations, évènements et commandes) qui sont détaillés ci-dessous.

Chaque signet comprend un identifiant d'un élément mémorisé par ce signet, et un lien vers cet élément mémorisé. La nature des éléments mémorisés par les signets peut être de quatre types différents :
- Objets connectés (exemples : capteurs, actuateurs) ;
- Services (exemple : prévision météo) ;
- Personnes (exemples : personnes de la famille, cercle d'amis) ;
- contenu (exemples : musique, vidéo, messages textes).

Le dispositif 1 permet de recevoir des évènements relatifs aux éléments mémorisés par les signets de la liste, ces évènements étant envoyés par le serveur 3. Les moyens d'affichage, compris dans le dispositif 1, permettent d'afficher les évènements reçus. Le serveur envoie par exemple des évènements avec les mises à jour de la liste de signets. Le dispositif affiche par exemple des évènements pendant un certain temps avant de revenir, en l'absence d'action de l'utilisateur, à la fonction principale d'affichage de la liste de signets. Un écran tactile permet par exemple à l'utilisateur d'accéder au détail des évènements.

A titre illustratif, voici quelques exemples d'événements:
- exemple d'événement lié à un objet connecté : le chauffage « Maison » est passé en mode ECO;
- exemple d'événement lié à un service : la prévision météo pour demain est « Soleil, 14°C mini, 25°C maxi » ;
- exemple d'événement lié à une personne : Alix vous a envoyé un message vocal;
- exemple d'événement lié à un contenu : Jérôme a commenté le titre « X » de l'interprète « Y » de votre audiothèque

Le dispositif 1 permet aussi d'afficher des informations, dynamiques ou non, sur l'état des éléments mémorisés par les signets de la liste. En d'autres termes, les signets sont dynamiques : ces informations sont affichées en plus d'une identification de l'élément mémorisé par chaque signet (identification réalisée par exemple par un texte, une image ou tout autre moyen permettant d'identifier l'élément). Par exemple, ces informations sont des valeurs numériques, des images, des valeurs textuelles, etc. Des exemples concrets d'informations sont donnés ci-dessous avec la figure 2.

Le dispositif 1 permet d'afficher des commandes pouvant être exécutées par les éléments mémorisés par les signets, et permet à l'utilisateur de sélectionner et activer ces commandes.

A titre illustratif, voici quelques exemples de commandes:
- exemple de commandes liées à un contenu audio : lecture, pause, etc ;
- exemple de commandes liées à des objets connectés : éteindre le chauffage, désactiver l'alarme, fermer les volets;
- exemple de commandes liées à une personne : laisser un message vocal, signaler que je suis rentré à la maison (pour un enfant) ;
- exemple de commandes liées à un service : cocher la liste des courses à faire (dans une liste préconfigurée) (exemple : il manque du beurre et du lait).

Les informations et les commandes peuvent être affichées en permanence ou bien seulement si l'utilisateur sélectionne le signet associé (par exemple au moyen d'un appui du doigt sur un écran tactile). Dans le dernier cas, la sélection d'un signet a pour effet d'afficher en plein écran des informations associées et des commandes accessibles (boutons qu'il est possible d'actionner à partir du dispositif). Sans autre action de la part de l'utilisateur et au bout d'un certain temps, l'écran reviendra à l'affichage des signets (fonction principale du dispositif).

La **figure 2** présente un exemple de liste de signets enrichie affichée par le dispositif de gestion de signets 1 de la figure 1.

Cette liste, intitulée « mon univers », comprend cinq zones 21 à 25, associées chacune à un signet (dont le titre apparaît souligné sur la figure 2).

Dans la première zone 21, un premier signet est représenté par son titre « Maison » et par une icône associée. Le titre du signet est un identifiant de l'élément mémorisé par le signet, à savoir en l'espèce un ensemble d'objets connectés représentant la maison connectée (catégorie : objet connecté) : un capteur de température situé dans la maison, un compteur électrique et un chauffage. Dans cette première zone 21, des informations relatives à ces objets connectés sont également fournies : « 22°C » (température mesurée), « 260W » (consommation électrique instantanée) et « ECO » (chauffage en mode Economie).

Dans la deuxième zone 22, un deuxième signet est représenté par son titre « Piscine » et par une icône associée. Le titre du signet est un identifiant de l'élément mémorisé par le signet, à savoir en l'espèce un capteur de température situé dans une piscine (catégorie : objet connecté). Dans cette deuxième zone 22, une information relative au capteur est également fournie : « 18,5°C » (température mesurée).

Dans la troisième zone 23, un troisième signet est représenté par son titre « Jérôme » et par une icône associée. Le titre du signet est un identifiant de l'élément mémorisé par le signet, à savoir en l'espèce une personne. Dans cette troisième zone 23, sont également fournies des informations (« piscine » et « 18,5°C ») relatives à un objet connecté (capteur de température situé dans une piscine) du profil de la personne « Jérôme ».

Dans la quatrième zone 24, un quatrième signet est représenté par son titre « Alix » et par une icône associée. Le titre du signet est un identifiant de l'élément mémorisé par le signet, à savoir en l'espèce une personne. Dans cette quatrième zone 24, une information relative à l'état de la personne « Alix » est fournie : « hors ligne ».

Dans la cinquième zone 25, un cinquième signet est représenté par son titre « Temps » et par une icône associée. Le titre du signet est un identifiant de l'élément mémorisé par le signet, à savoir en l'espèce un service. Dans cette cinquième zone 25, des informations relatives au service sont fournies : « 14°C » (température du jour) et « Demain : soleil 25°C» (prévision pour le lendemain).

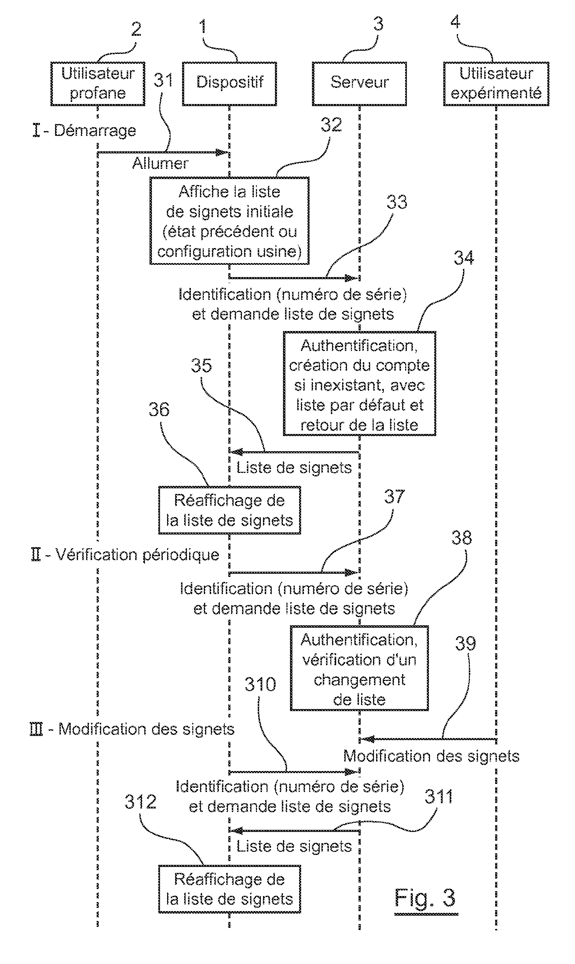

On présente maintenant, en relation avec la **figure 3****,** le fonctionnement du dispositif de gestion de signets 1, dans des phases de démarrage (I), vérification périodique (II) et modification (III).

Dans la phase de démarrage (I), l'utilisateur profane 2 allume (flèche 31) le dispositif 1. Le dispositif 1 affiche alors (bloc 32) la liste de signets initiale (correspondant à l'état précédent de la liste de signets, si le dispositif a déjà été utilisé, ou bien à une liste de signets par défaut (liste de configuration d'usine)). En outre, le dispositif 1 transmet (flèche 33) au serveur 3 une requête d'obtention d'une liste préconfigurée de signets. Cette requête comprend un identifiant du dispositif 1 (numéro de série). A la réception de cette requête, le serveur 3 authentifie le dispositif 1 et retrouve le compte associé au dispositif 1 et comprenant la liste de signets, si ce compte existe déjà, sinon il crée un nouveau compte comprenant une liste par défaut (bloc 34). Enfin, le serveur 3 retourne la liste de signets au dispositif 1 (bloc 35). A la réception de cette liste, le dispositif 1 l'affiche et permet à l'utilisateur d'utiliser les signets qu'elle contient (bloc 36).

Dans la phase de vérification périodique (II), le dispositif 1 transmet à nouveau (flèche 37) au serveur 3 une requête d'obtention d'une liste préconfigurée de signets. A la réception de cette requête, le serveur 3 authentifie le dispositif 1 et retrouve le compte associé au dispositif 1 ; puis, il vérifie si la liste de signets comprise dans ce compte a été modifiée depuis la dernière interrogation du dispositif 1 (bloc 38). Dans le cas où une modification a eu lieu, voir la description ci-après de la phase de modification.

Dans la phase de modification (III), l'utilisateur expérimenté 4 (en utilisant le navigateur 5 de son ordinateur personnel 6, non représentés sur la figure 3) accède au serveur 3 afin de modifier la liste de signets (ajout, suppression ou modification de signet) et obtenir une liste modifiée (flèche 39). A la réception suivante d'une requête d'obtention de la liste (flèche 310), envoyée par le dispositif 1 (soit lors de la prochaine vérification périodique, soit après avoir été averti de la modification de la liste par le serveur), le serveur effectue les actions du bloc 38 (non représenté à nouveau, pour simplifier la figure 3) puis retourne la liste modifiée au dispositif 1 (flèche 311). A la réception de cette liste modifiée, le dispositif 1 l'affiche et permet à l'utilisateur d'utiliser les signets qu'elle contient (bloc 312).

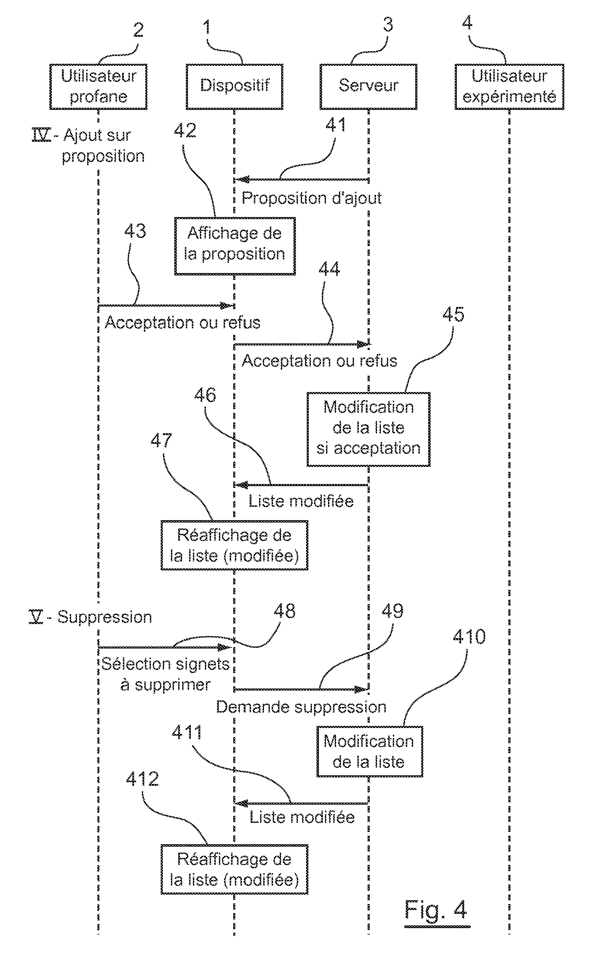

On présente maintenant, en relation avec la **figure 4****,** le fonctionnement du dispositif de gestion de signets 1, dans des phases d'ajout de signet sur proposition (IV) et suppression de signet (V).

Dans la phase d'ajout de signet sur proposition (IV), le serveur transmet au dispositif 1 (flèche 41) une proposition d'ajout d'au moins un signet supplémentaire à la liste de signets. Sur réception de cette proposition, le dispositif 1 l'affiche et permet à l'utilisateur profane 2 de formuler une acceptation ou un refus de la proposition reçue (bloc 42). L'utilisateur profane 2 formule son choix (flèche 43) et le dispositif transmet au serveur 3 (flèche 44) la décision (acceptation ou refus) formulée par l'utilisateur profane 2. Enfin, en cas d'acceptation, le serveur 3 ajoute le au moins un signet supplémentaire à la liste (bloc 45) puis retourne la liste modifiée au dispositif 1 (flèche 46). A la réception de cette liste modifiée, le dispositif 1 l'affiche et permet à l'utilisateur d'utiliser les signets qu'elle contient (bloc 47).

Dans la phase de suppression de signet (V), l'utilisateur profane 2 sélectionne au moins un signet à supprimer de la liste (flèche 48). Le dispositif transmet au serveur 3 (flèche 49) la demande de suppression formulée par l'utilisateur profane 2. Le serveur 3 supprime le au moins un signet de la liste (bloc 410) puis retourne la liste modifiée au dispositif 1 (flèche 411). A la réception de cette liste modifiée, le dispositif 1 l'affiche et permet à l'utilisateur d'utiliser les signets qu'elle contient (bloc 412).

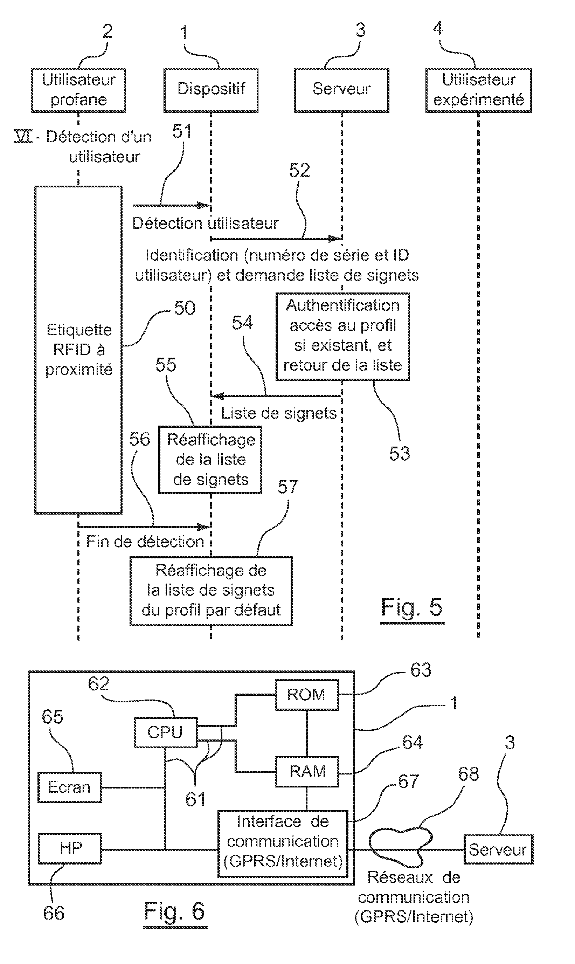

On présente maintenant, en relation avec la **figure 5****,** le fonctionnement du dispositif de gestion de signets 1, dans une phase de détection d'un utilisateur (VI).

On suppose dans ce cas que le dispositif 1 n'est pas dédié à un utilisateur (contrairement à un téléphone mobile par exemple), mais peut être utilisé par un ensemble d'utilisateurs (par exemple dans un lieu public, au sein d'une communauté ou dans une famille). Chaque utilisateur est par exemple muni d'une étiquette RFID (bloc 50), contenant un code RFID permettant de le détecter et l'authentifier. D'autres techniques de détection et authentification peuvent être utilisées sans sortir du cadre de l'invention.

Quand un utilisateur est détecté à proximité du dispositif 1 (flèche 51), le dispositif insère un identifiant de l'utilisateur détecté (code RFID) dans la requête d'obtention de la liste de signets (en plus de l'identifiant du dispositif 1 (numéro de série)) (flèche 52). Cette détection est par exemple réalisée grâce à un lecteur RFID compris dans le dispositif 1, et permettant la lecture du code RFID de l'étiquette RFID d'un utilisateur. A cet effet, le dispositif est muni d'une connexion sans fil (par exemple de type RF 868, Zigbee ou Wifi).

A la réception de cette requête, le serveur 3 authentifie l'utilisateur détecté (et éventuellement le dispositif 1) puis retrouve le compte associé à l'utilisateur détecté et comprenant une liste de signets configurée en fonction de cet utilisateur détecté (bloc 53).

Puis le serveur 3 retourne cette liste au dispositif 1 (flèche 54). A la réception de cette liste, le dispositif 1 l'affiche et permet à l'utilisateur d'utiliser les signets qu'elle contient (bloc 55).

En cas de non détection ou de fin de détection d'un utilisateur connu (flèche 56) (pas de badge RFID détecté, ou badge détecté non connu ou non autorisé sur ce dispositif), le dispositif affiche (jusqu'à la prochaine phase de vérification périodique (II)) la dernière liste de signets mémorisée dans le dispositif 1 pour le profil « standard » attaché au dispositif lui-même (c'est-à-dire le profil attaché à aucun utilisateur en particulier) (bloc 57).

La **figure 6** présente la structure d'un dispositif selon un mode de réalisation particulier de l'invention.

Le dispositif 1 comporte un bus de communication 61 auquel sont reliés:
- une unité centrale de traitement 62 (qui est par exemple un microprocesseur référencé CPU) ;
- une mémoire morte (ROM) 63, pouvant comporter un ou plusieurs programmes qui quand ils sont exécutés permettent au dispositif 1 de fonctionner comme décrit ci-dessus;
- une mémoire vive (RAM) 64, comportant des registres adaptés à enregistrer des variables et paramètres créés et modifiés au cours de l'exécution du ou des programme(s) précité(s) ;
- une interface de communication 67 reliée à un ou plusieurs réseaux de communication 68 (par exemple GPRS/Intemet);
- un écran tactile 65 permettant de visualiser et utiliser la liste de signets, ainsi que des informations, des évènements et des commandes (dans une variante, un écran non tactile est combiné avec des moyens d'interface homme-machine tels qu'un clavier, une souris ou un crayon optique) ;
- un ou plusieurs haut-parleur(s) 66, permettant de restituer des sons ou de la musique, si le dispositif possède des capacités de lecture de contenus audio.

Le bus de communication 61 permet la communication et l'interopérabilité entre les différents moyens inclus dans le dispositif 1 ou reliés à ce dispositif De manière plus générale, grâce au bus de communication 61, l'unité centrale 62 est susceptible de communiquer des instructions à tout moyen inclus dans le dispositif 1.

L'unité centrale 62 commande et dirige l'exécution des instructions ou portions de code logiciel du ou des programme(s) précité(s). Lors de la mise sous tension, le ou les programmes qui sont stockés dans la mémoire morte 63 sont transférés dans la mémoire vive 64 qui contiendra alors le code exécutable du ou des programme(s), ainsi que des registres pour mémoriser les variables et paramètres nécessaires à la mise en oeuvre de ce(s) programme(s).

Il convient de noter que le dispositif 1 peut également être un appareil programmé. Cet appareil contient alors le code du ou des programmes informatiques par exemple figé dans un circuit intégré à application spécifique (ASIC).

D'un point de vue matériel, le dispositif comprend également, dans un mode de réalisation particulier :
- une batterie, éventuellement rechargeable;
- un aimant afin d'adhérer à toute surface métallique ;
- des moyens de fixation lui permettant d'être fixé à une vitre ;
- un pied lui permettant de tenir debout sur une surface plane.

## Revendications

1. Dispositif (1) de gestion de signets électroniques, **caractérisé en ce qu'**il comprend des moyens (62, 63, 64) de réalisation d'une fonction principale de gestion de signets électroniques, activés au démarrage et à des instants déterminés, sauf en cas de passage dudit dispositif de gestion de signets dans un mode de veille, lesdits moyens de réalisation de la fonction principale comprenant :
- des premiers moyens (62, 67) de transmission, permettant de transmettre à un serveur une requête (33, 37, 310) d'obtention d'une liste préconfigurée de signets, ladite requête comprenant un identifiant dudit dispositif de gestion de signets;
- des premiers moyens (62, 67) de réception, permettant de recevoir ladite liste préconfigurée (35, 311) transmise par ledit serveur en réponse à ladite requête;
- des moyens (65) d'affichage, permettant d'afficher la liste préconfigurée reçue;
- des moyens (62, 65), d'utilisation, permettant à un utilisateur d'utiliser les signets de la liste préconfigurée affichée;
- des deuxièmes moyens (62, 67) de réception, permettant de recevoir une proposition (41), envoyée par le serveur, d'ajout d'au moins un signet supplémentaire à ladite liste préconfigurée ;
- des moyens (62, 65) d'acceptation ou refus, permettant audit utilisateur de formuler une acceptation ou un refus de la proposition reçue ;
- des deuxièmes moyens (62, 67) de transmission, permettant de transmettre au serveur l'acceptation ou le refus (44) formulé par l'utilisateur, afin que le serveur ajoute ledit au moins un signet supplémentaire à ladite liste préconfigurée en cas d'acceptation.
et **en ce que** ledit dispositif de gestion de signets ne comprend pas:
- de moyens participant à une construction initiale de ladite liste préconfigurée sur ledit serveur ;
- de moyens participant à un ajout à ladite liste préconfigurée d'au moins un signet supplémentaire non proposé préalablement par ledit serveur.

2. Dispositif selon la revendication 1, **caractérisé en ce que** lesdits moyens de réalisation de la fonction principale comprennent :
- des premiers moyens (62, 65) de sélection, permettant audit utilisateur de sélectionner au moins un signet à supprimer de ladite liste préconfigurée ;
- des troisièmes moyens (62, 67) de transmission, permettant de transmettre au serveur une requête (49) de suppression dudit au moins un signet à supprimer, afin que le serveur supprime ledit au moins un signet à supprimer de ladite liste préconfigurée.

3. Dispositif selon l'une quelconque des revendications 1 à 2, **caractérisé en ce que** chaque signet de ladite liste préconfigurée comprend :
- un identifiant d'un élément mémorisé par ledit signet;
- un lien vers ledit élément mémorisé par ledit signet ;
et **en ce que** les éléments mémorisés par les signets de ladite liste préconfigurée appartiennent au groupe comprenant:
- des objets connectés ;
- des services ;
- des personnes ;
- des contenus.

4. Dispositif selon l'une quelconque des revendications 1 à 3, **caractérisé en ce que** chaque signet de ladite liste préconfigurée comprend :
- un identifiant d'un élément mémorisé par ledit signet;
- un lien vers ledit élément mémorisé par ledit signet ;
**en ce que** lesdits moyens d'utilisation comprennent des troisièmes moyens (62, 67) de réception, permettant de recevoir au moins un événement, envoyé par le serveur, relatif à un élément mémorisé par un des signets de ladite liste préconfigurée,
et **en ce que** lesdits moyens (65) d'affichage permettent d'afficher ledit au moins un événement reçu.

5. Dispositif selon l'une quelconque des revendications 1 à 4, **caractérisé en ce que** chaque signet de ladite liste préconfigurée comprend :
- un identifiant d'un élément mémorisé par ledit signet;
- un lien vers ledit élément mémorisé par ledit signet ;
**en ce que en ce que** au moins un signet de ladite liste préconfigurée est associé à au moins une information, dynamique ou non, sur l'état de l'élément mémorisé par ledit signet,
et **en ce que** lesdits moyens (65) d'affichage permettent d'afficher ladite au moins une information.

6. Dispositif selon l'une quelconque des revendications 1 à 5, **caractérisé en ce que** chaque signet de ladite liste préconfigurée comprend :
- un identifiant d'un élément mémorisé par ledit signet;
- un lien vers ledit élément mémorisé par ledit signet ;
**en ce que en ce que** au moins un signet de ladite liste préconfigurée est associé à au moins une commande pouvant être exécutée par l'élément mémorisé par ledit signet,
et **en ce que** lesdits moyens (65) d'affichage permettent d'afficher ladite au moins une commande.

7. Dispositif selon l'une quelconque des revendications 1 à 6, **caractérisé en ce qu'**il comprend des moyens (67) de communication sans fil avec ledit serveur.

8. Dispositif selon l'une quelconque des revendications 1 à 7, **caractérisé en ce qu'**il comprend :
- des moyens de détection, permettant de détecter un utilisateur et obtenir un identifiant un identifiant de l'utilisateur détecté ;
- des moyens d'insertion, activés en cas de détection d'un utilisateur et permettant d'insérer l'identifiant de l'utilisateur détecté dans ladite requête d'obtention de la liste préconfigurée de signets;
de sorte que ladite liste préconfigurée, transmise par ledit serveur en réponse à ladite requête, soit fonction de l'identifiant de l'utilisateur détecté.

9. Procédé de gestion de signets électroniques, exécuté par un dispositif (1) de gestion de signets électroniques et **caractérisé en ce qu'**il comprend des étapes de réalisation d'une fonction principale de gestion de signets électroniques, effectuées au démarrage dudit dispositif et à des instants déterminés, sauf en cas de passage dudit dispositif dans un mode de veille, lesdites étapes de réalisation de la fonction principale comprenant des étapes consistant à :
- transmettre à un serveur une requête (33, 37, 310) d'obtention d'une liste préconfigurée de signets, ladite requête comprenant un identifiant dudit dispositif de gestion de signets;
- recevoir ladite liste préconfigurée (35, 311) transmise par ledit serveur en réponse à ladite requête;
- afficher (36, 312) la liste préconfigurée reçue;
- permettre à un utilisateur d'utiliser les signets de la liste préconfigurée affichée;
- recevoir une proposition (41), envoyée par le serveur, d'ajout d'au moins un signet supplémentaire à ladite liste préconfigurée ;
- permettre à un utilisateur d'accepter ou de refuser la proposition reçue;
- transmettre au serveur l'acceptation ou le refus (44) formulé par l'utilisateur, afin que le serveur ajoute ledit au moins un signet supplémentaire à ladite liste préconfigurée en cas d'acceptation;
et **en ce que** ledit procédé ne comprend pas:
- d'étape participant à une construction initiale de ladite liste préconfigurée sur ledit serveur ;
- d'étape participant à un ajout à ladite liste préconfigurée d'au moins un signet supplémentaire non proposé préalablement par ledit serveur.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé selon la revendication 9, lorsque ledit programme est exécuté sur un ordinateur.

11. Moyen de stockage lisible par ordinateur, éventuellement totalement ou partiellement amovible, stockant un programme d'ordinateur comprenant un jeu d'instructions exécutables par un ordinateur pour mettre en oeuvre le procédé de la revendication 9.
